## Europäisches Patentamt

(19) **European Patent Office**

**Office européen des brevets**

(11) Publication number: **0 025 349**
**B1**

(12) **EUROPEAN PATENT SPECIFICATION**

(45) Date of publication of patent specification: **22.06.83**

(51) Int. Cl.³: **B 01 D 13/00, B 01 D 31/00**

(21) Application number: **80303130.1**

(22) Date of filing: **05.09.80**

(54) Improved ultrafiltration and reverse osmosis device.

(30) Priority: **07.09.79 US 73295**

(43) Date of publication of application:
**18.03.81 Bulletin 81/11**

(45) Publication of the grant of the patent:
**22.06.83 Bulletin 83/25**

(84) Designated Contracting States:
**AT BE CH DE FR GB IT LI LU NL SE**

(56) References cited:
**DE - A - 2 817 249**
**FR - A - 2 017 002**
**FR - A - 2 287 934**
**FR - A - 2 407 012**
**GB - A - 1 256 492**
**NL - A - 7 214 987**
**US - A - 3 485 374**
**US - A - 3 977 967**

(73) Proprietor: **UNION CARBIDE CORPORATION**
**Old Ridgebury Road**
**Danbury Connecticut 06817 (US)**

(72) Inventor: **Hargitay, Bartholomew**
**15 Edna Street**
**White Plains, New York (US)**

(74) Representative: **Blake, John Henry Francis et al,**
**BROOKES AND MARTIN High Holborn House**
**52/54 High Holborn**
**London WC1V 6SE (GB)**

## Improved ultrafiltration and reverse osmosis device

This invention relates in general to an improved ultrafiltration and reverse osmosis device. In one aspect this invention relates to a multi-tubular module which is used in such devices and has improved mechanical strength, resistance to thermal cycling and other desirable features over tubular modules presently in use. In a further aspect, this invention relates to a multi-tubular module which has an improved sanitary design wherein the exposed surfaces are devoid of crevices and hence sanitization or sterilization of its surfaces can be easily effected.

Differential thermal expansion is an inherent problem in tubular ultrafiltration and reverse osmosis modules which contain chemically inert porous tubes such as those composed of aluminia, silica, zirconia, porous glass, porous carbon and the like, which are enclosed in a shell. Such tubes usually are friable and easily broken. The materials being used in commercially available shells which house the tubes generally exhibit a 3 to 10 times higher thermal expansion than the refractory porous tubes themselves and in many instances lead to untoward stresses during thermal cycling. To avoid this, floating joints have been used to allow a few millimeter axial displacement of the tubes (see US Patent 3,977,967). Unfortunately, such a floating joint, usually an elastomer in a counter sunk hole, presents crevices difficult to clean, and is therefore not acceptable by sanitary standards in food applications (3-A Sanitary Standards by Int. Assoc. Milk, Food and Environmental Sanitarians (U.S. Public Health Service, the Dairy Industry Committee). In a module containing more than three tubes it is, of course, impractical to demount the joints for cleaning, as required by 3-A Standards, and therefore a crevice free design is essential.

Thus the aforementioned problem encountered with modules of the multi-tubular design is the effect of axial compression during operation. If the tubes used are not absolutely straight, an end-on compression will have a bending component resulting in a buckling effect. In fact, a free standing single carbon tube of 10 mm OD and 120 cm length breaks by buckling under 5 kg axial load.

It has been proposed (see FR—A—2017002) to bond a sheaf of tubes together along their longitudinal lines of contact. However this results in a closed internal area within the sheaf from which permeate through the tubes cannot be collected.

The present invention circumvents the aforementioned problems of differential thermal expansion and sanitary design by creating a sheaf of tubes which are mutually anchored to each other in spaced intervals by permanent bonds. The net effect of this spaced bonding is a reinforcement and high resistance to buckling while allowing permeate to flow from within the sheaf. Additionally, by making the tube-header joint permanent and providing a header-shell joint which is flexible and demountable, the device may be easily cleaned or sterilized by steam or known chemical techniques. In fact, the use of a shell becomes totally optional and will, in most cases, be superfluous because the monolith tube-sheaf is self-supporting.

Accordingly the present invention is directed to an ultrafiltration and reverse osmosis device which comprises a module containing a plurality of axially aligned hollow, porous tubular members disposed in a permeate collection zone, said tubular members being bonded together at spaced intervals along their outer surfaces in a manner which prevents relative axial movement of individual members with respect to one another and which permits permeate passing through the walls of said tubular members to flow freely between adjacent members, and being fixedly mounted at each end into a header.

This invention thus provides a multi-tubular module which has a high resistance to buckling and yet permits permeate to flow freely between adjacent tubes. Additionally, the module is of such a design that it can be easily cleaned and sanitized or sterilized when its use is desired for food or drug applications. Moreover, attachment of the module to the rest of the device is easily effected by conventional means such as those employed in the food industry.

The invention will be more easily understood by referring to the accompanying drawings wherein:

Figures 1 to 4 depicts various methods for affixing the individual tubes together along their lengths (Figures 1 (a), (b) and (c) are for comparative purposes).

Figure 5 depicts cross-sectional views of a header with and without a shell.

Figure 6 depicts a perspective view of a module shell which can be fixed around the header and yet allows for slight relative movement due to differential thermal expansion between the tube sheaf and the shell.

Figure 7 depicts a perspective and end view of a typical module shell.

Figure 8 depicts a cross-sectional view of a typical mold in which the header can be cast.

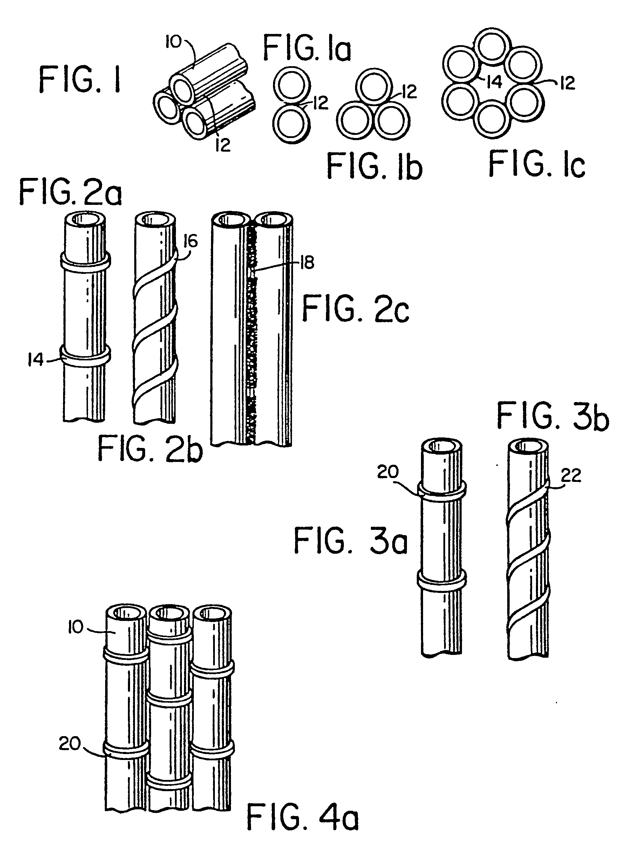

With further reference to the drawings, Figure 1 depicts the simplest way of bonding the tubes 10 to each other and involves depositing a very thin line of cement along the line of contact 12 of adjacent tubes. This continuous line imparts a very high rigidity and strength to the system but has the disadvantage of rendering a portion of the tube surfaces useless in the permeation process. In addition to the cement-line itself, which is negligible, all surfaces facing the inside of the bundle have no suitable outlet where the permeate could escape. This "condemned" surface 14 can be appreciable and depends on the geometry of the stacking of the tubes. While in the triangular arrangement of the tube end view of Figure 1 (b) only 1/6 is inoperative, in the hexagonal case of the tube end view of Figure 1 (c) 1/3 is useless. While there are ways of opening up this enclosed space, they are awkward and the present invention makes use of the other methods hereinafter described for achieving optimum properties.

Figure 2 depicts a means for bonding of tubes wherein attachment of one tube to another is done at spaced intervals. For instance, to permit free drainage of the permeate, one can attach soluble rings 14 or spirals 16 as spacers to the tubes before the tube bundles are formed. These spacers can be dissolved out after the tubes have been cemented to each other as in Figure 1. Examples of such water soluble spacers are polyethylene oxide tape, polyvinylalcohol tape or fibers, calcium alginate fibers, and the like. These materials will readily dissolve in hot water or in mild base, leaving behind holes 18 through which permeate can freely flow. The presence of these interruptions in the cement line does not weaken the system significantly.

Figure 3 depicts applications where the permeation rate is high and in such instances, it is desirable to have even larger open spaces between adjacent tubes. In these cases, it is preferred to use insoluble spacers which serve at the same time as anchoring agents. Either separate rings 20 or for ease of manufacturing continuous spirals 22 of bands or threads are used for this purpose. For reasons of ease of stacking it is advantageous to keep the width of the rings or spiral tape smaller than about 1/6 of the space in between. They must, of course, be narrower than 1/3 of the repeat distance and should not be much narrower than 1/30 in order to conserve the strengthening role they have to play. The preferred range is 1/6 to 1/12.

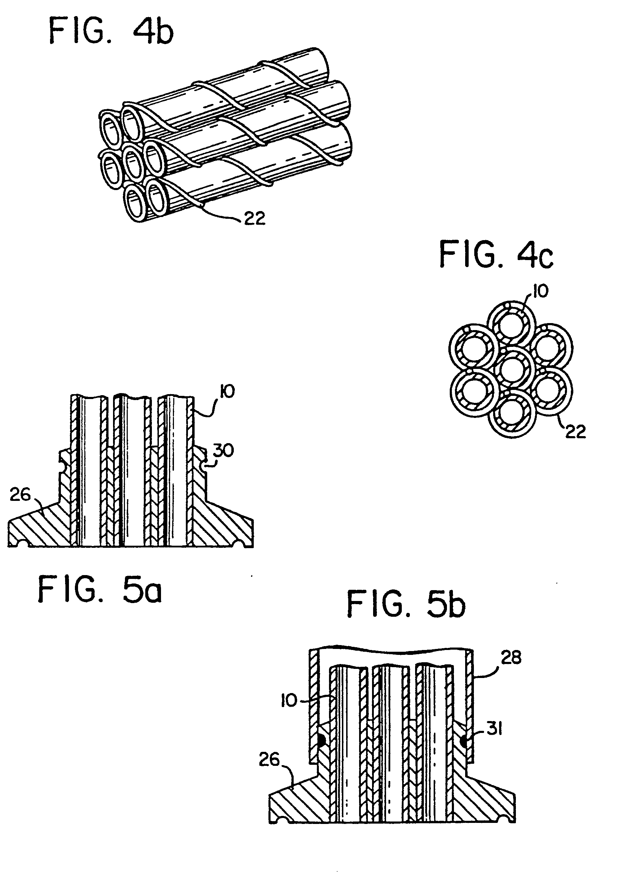

Figure 4 depicts an assembly of 3 or more tubes 10 bonded by spacers 20 or 22. It should be noted that is is not essential to place spacers on every individual tube, but the tubes must then be stacked in an alternating fashion. Therefore, for ease of assembly, it is preferred to use spacers on each tube.

In order to keep the porous tubes at a preselected distance from each other, a cement is applied to a chemically inert, preferably fibrous, spacer material 20 or 22 such as string, tow, ribbon, gauze, etc. Materials of choice are cotton, polyamide, polyester, asbestos and the like. This spacer is wrapped around the porous tubes and the tubes are then stacked into bundles in such a way that the spacers make contact with adjacent tubes (Figure 4a, b, c).

The exact geometry of packing of the tubes within the sheaf is not critical but for two reasons the hexagonal packing is preferred: First, each (non marginal) tube being surrounded by six neighbours, this arrangement makes maximal use of the strengthening effect; second, the hexagonal array makes most efficient use of space and is best suited to be installed into cylindrical shells and to be adapted to the conventional sanitary fittings. In the recommended hexagonal packing the most likely multiples of tubes are 3, 7, 19, 37, 61, 85 and the like.

The distance between tubes is governed by the thickness of the spacers used and should be determined as a function of total permeate flux expected. Ultrafiltration modules containing 19 tubes or less as well as reverse osmosis modules can be constructed with spacers as small as 1 to 2 millimeters. Larger modules (37 tubes and up) which produce a high flow of permeate may necessitate spacers 2 to 4 millimeters to permit the escape of the permeate without creating a congestive back pressure.

Figure 5 depicts two cross-sectional views of the header or tube sheet 26 wherein the tubes 10 are affixed in a manner to eliminate crevices for each of cleaning, and yet provide for attachment to the module shell 28 in those instances when a shell is employed. For example, a split sheet can be constructed of a suitable rigid material such as metal, glass or plastic; the parts of this shell may be independent or may be hinged for convenience. If such a shell is used, the groove 30 provided on the outside of the header 26 accommodates an elastomer O-ring 31 which assures an essentially tight fit between shell 28 and header 26, but which allows for an axial differential expansion on temperature variations.

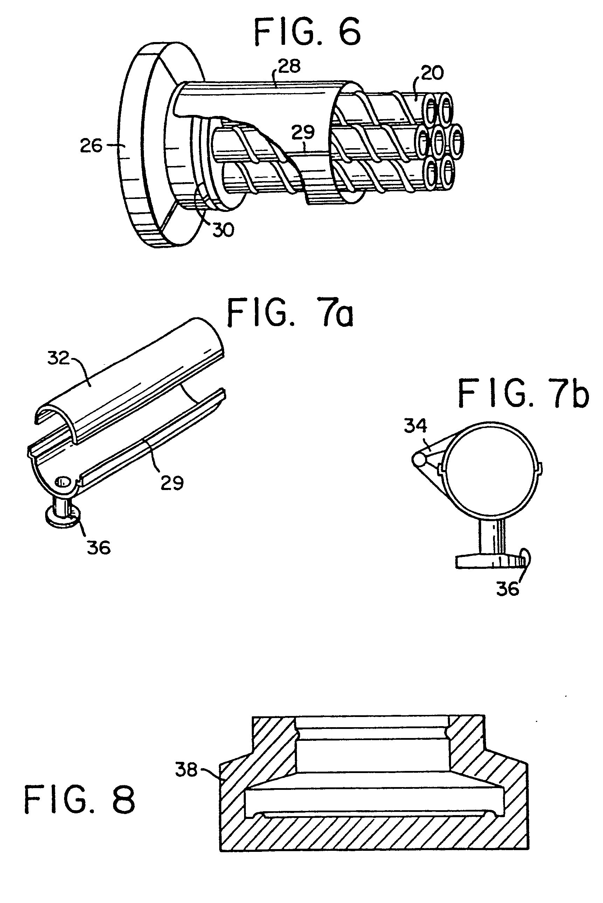

Figure 6 depicts a view of the header 26 affixed to tubes 10 and shows a partial cutaway of the shell 28 and groove 30 into which fits the elastomeric O-ring (not shown in Figure 6) and which permits the shell to undergo differential thermal expansion.

Figure 7 depicts a perspective and end view of a typical module shell. It Is convenient to shape the longitudinal edges 29 of the half shells in a way to assure easy and positive closure. A lip type design 32 and a hinged shell 34 are shown, but a tongue-and-groove or similar design is also practical. The two half shells are not necessarily of the same size but are nearly so to ensure an easy access to the tube sheaf for inspection and cleaning. Thus, two aspects are essential to this invention: The shell, when used, is easily removable without necessarily disconnecting the module and the locus of differential expansion is shifted from the tube/header interface to the header/shell interface.

Figure 8 depicts a cross-sectional view of a mold 38 in which the header or tube sheet can be cast.

At least one of the half-shells is equipped with a port 36 for removing permeate. It is convenient to locate this port close to one end of the module and to provide it in turn with a sanitary fitting. The shells are held in position by any suitable quick release fastener device which may or may not be an integral part of the shell.

In practice, the tubes can be bonded to each other by one of several means. For instance, the tubes can be bonded together by cements which fill the following requirements:

(a) wetting of the surface of the porous tube;

(b) chemical stability in the process liquids to be processed by the system;

(c) thermal stability at use temperature;

(d) adhesion (bonding) to the porous tube not significantly weakened by the liquids and cleaners;

(e) at the time of application of the cement a limited penetration into the porous matrix (penetration sufficient for anchoring but not enough to significantly reduce the permeating path). Permeation of 0.001 to 0.05 cm has been found to be satisfactory.

The cements used are caused to harden by suitable means in such a way that on hardening they permanently bond adjacent tubes together. "Suitable means" depends on the nature of the cement as will become clear from the discussion of their chemical composition.

The "cement" can be a viscous solution of a polymer in a solvent or a mixture thereof. The solvents are selected to be relatively volatile and in this case the "suitable means" of hardening consists of evaporation of the solvent at ambient or elevated temperature, in general in a gentle stream of air. Examples of such solvent-based cement are alkyl acrylate in ketones and/or esters; polyvinyl chloride in tetrahydrofuran and/or Cellosolve®, polysulfone in dichloroethane and the like. Solvents which are very hygroscopic should be avoided to prevent the precipitation of the polymer under the influence of condensation of air-borne humidity. Bonds made of precipitated polymer are inferior in strength.

Another class of "cements" that can be used are the thermosetting resins such as phenolics, melamines, epoxy and similar resins. The preferred ones are those which are liquid before curing and can therefore be easily impregnated into the fibrous spacer. In the case of thermosetting resins, the "suitable means" signifies curing, either at ambient or at elevated temperature.

In general, in order to achieve the desired strengthening of the tube bundle the "cement" used has in practice to be tough more rigid than flexible. A typical elastomer (e.g. rubber silastic) is a poor choice as it εʺows some relative displacement of the tubes which, in turn, can lead to bowing followed by buckling and breakage.

During the actual process of curing the tube bundle is concentrically squeezed either by a series of tight elastic loops or by a specially constructed jig. Care should be taken at this stage, when the stiffening bonds are being formed, that the sheaf is straight, if necessary by forcing it into shape before curing is complete. The straighter the sheaf, the higher end-on loading it can take without breaking.

After curing of the anchoring-spacers is complete, the ends of the sheafs are cut perpendicularly to their length in such a way that the cut surfaces are smooth and all tubes are exactly of the same length. This will assure a tight seal free of crevices with the tube sheet (or header) as discussed below.

In the preferred configuration of this invention the tube sheet (or header) is at the same time also the member (flange) that serves to connect the module to the piping system (the "loop") of the ultrafiltration reverse osmosis unit. While there exists a multitude of possible designs for this member, the preferred one is inspired by the flanges used in sanitary food processing equipment. The advantage of this design is that it is held together by a single clamp, demountable without the use of tools. In addition, if properly constructed, it yields a header free of crevices which is therefore admissible to exacting food applications.

A suitable split mold is fabricated with surfaces of high polish. Instead of such a permanent solid split mold, an elastomeric mold can be used which, because of its deformability does not have to be split. The general shape of this mold is shown in Figure 8. A suitable elastomer for this application is a polyurethane.

The consolidated bundle of tubes is then placed well centered into the mold in such a way that the openings of the tubes are closed off by the bottom of the mold. When the resin is poured into the mold, it cannot rise into the tubes because of their close contact with the mold. It is advantageous to fill the mold first slightly higher with the liquid resin and then drop its level by about 1 to 2 mm to the final height. This manipulation assures a favorable contact angle between header and tubes i.e. a configuration which presents no crevices for growth of microorganisms.

The resin to be used as a header-flange material in general has to satisfy all of the following conditions: (1) nonporous body and surface; (2) toughness (tensile strength > 3000 psi (approx. 20.7 pascals), flex. mod. > 150,000 psi (approx. 1034 pascals); (3) minimal shrinkage on solidification- (4) wetting of porous tubes; (5) adhesion to tubes in presence of process liquids and cleaners; (6) chemically resistant to process liquids in contact, and (7) thermally stable at use-temperature.

The resin used to form the flange-header is normally selected from the group of thermosetting resins such as phenolics, melamines, epoxides, and the like. Both filled and unfilled resins may be used. As in the case of the resins applied to the anchoring spacers, it is desirable for good bonding to have the resin slightly penetrate the surface of the porous tubes; penetration less than 0.01 mm is sufficient. Because of this requirement, resins with relatively low initial viscosity are preferred. The use of molten polymers rather than thermosetting resins is for the above reasons less satisfactory, although in suitable injection molding equipment, the generated pressure could enhance the penetration of the melt.

The use of polymer solutions to form the header is not recommended because of the necessity of low shrinkage on solidifying. However, polymer solutions may be used to promote wetting of the porous tubes e.g. polysulfone resin dissolved in methylene chloride may be painted over the ends of the tubes as a primer. The so primed tubes can then be potted into a polysulfone melt because the resin has already wetted the pores in the priming operation.

The result of the operations described above is a module header-flange as illustrated in Figure 5a which performs all of the following functions simultaneously: it ties the tube ends solidly together, it provides a leak-proof connection between the porous tubes and the header surface, and it provides a mechanical means to incorporate the module into a reverse osmosis ultrafiltration loop.

After the above header is made, the tube bundle is inverted and an identical header is constructed at its other end.

The module so constructed can be used for ultrafiltration without the necessity for a shell because it is essentially self supporting. The permeate appearing on the outside of the porous tubes can be collected by any suitably shaped trough which is not necessarily attached to the module. Several modules can be positioned above a pan which collects the filtrate. The modules can also be placed inside a cabinet for protection from mechanical damage.

The improved device of this invention is particularly well suited for use in the ultrafiltration apparatus of our U.S. Patent 3,977,967 to which reference is directed.

As indicated in the referenced patent the preferred tubular members are those composed of porous carbon which have a pore volume of at least about 0.08 cc/gm in the distribution peak in the pore diameter range wherein the majority of the pores are from 0.1 to 2 microns in diameter. The tubes preferably have an internal diameter of 0.3 to 3 cm. The tubes also contain a substantially uniform continuous porous coating of preformed aggregates of metal oxide particles, such as zirconia, having an average mean particle size of less than 5 microns preferably 0.1 to 1 microns. The coating is also from about 0.01 microns in thickness without substantial penetration into the tube wall.

By the term "sterilizably mounted" as employed herein is meant that the juncture between the tubular members and the header or tube sheet is rigid and non-porous and has smooth surfaces free of crevices or depressions which would otherwise be conductive for microbiological growth, and hence, difficult to sterilize. The module is preferably able to withstand temperature cycles of at least 100°C.

The contrast, by the mounting technique discloses in U.S. Patent 3,977,967 (see Figure 4), the individual tubes can undergo slight movements inwardly or outwardly in the tube sheet 34 and hence can trap foreign materials such as bacteria.

The following examples illustrate the best mode presently contemplated for the practice of this invention:

### Example 1

A 6-tube module was constructed as follows: Seven carbon tubes (10 mm OD and 6 mm ID and 120 cm length) were held together by 4 elastic bands in a hexagonal pattern. A free flowing resin mix was prepared from 100 parts Hysol R9—2039 and 20 parts H—3840 and through a hypodermic needle a continuous line was extruded along the contact line of adjacent (outside) tubes. The resin cured in 24 hours at room temperature to a hard cement. The central tube was pulled out and the two ends of the 6-tube bundle were cut with a carborundum wheel to form a smooth perpindicular face as shown in Fig. 1c.

A flexible mold as shown in Fig. 8 was made from Flexane #60 (Devcon) using a stainless steel sanitary flange (Triclover 1 1/2"—approximately 38.1 mm) as a template. (The opening of the flange was closed off by a Hysol resin plug to give the necessary smooth finish required). After the elastomer has cured, the mold (shown in Figure 8) could be peeled off the model.

The 6-tube sheaf was clamped in a vertical position with the tube ends pressing against the interior bottom of the flexible mold. A potting resin made from 100 parts Epon 815, 15 parts tetramine and 2 parts Silane was then poured around the tubes into the mold and was cured for 24 hours at room temperature before unmolding.

The same procedure was repeated with the other end of the sheaf.

The resulting 6-tube (spacer-less) module could be easily and effectively clamped to standard sanitary piping with conventional sanitary clamps.

The module was then subjected to an end-on load. At 90 kg total or 15 kg per tube, no breakage occurred and the initial curvature just doubled (from $1.4 \times 10^{-3}$ to $2.8 \times 10^{-3}$). This compares with 3.6 kg breaking strength for an individual tube.

Inspection by microscope shows that the surface blinded over (as shown in Figure 1) by the epoxy resin used is an average of 2 mm wide, i.e. approximately 6% of the total external surface.

## Example 2

Seven carbon tubes (10 mm OD x 6 mm ID x 120 cm length) were wrapped individually by a spacer made from a cotton 2 mm 12 ply string (polished twine #48) which was pulled through a funnel containing a resin made from 100 parts Epon 815, 15 parts Tetramine and 2 parts of silane. The tubes were stacked into a hexagonal pattern and were squeezed together by 6 rings of stretched rubber bands. The sheaf was then supported in a horizontal position in such a way that the tubes were straight enough to be able to look through the sheaf from one end to the other and were stored 24 hours at room temperature to permit the rest to cure.

The spacer was applied in such a fashion that adjacent pitches were 62 mm from each other and all tubes were wrapped in the same direction. The headers were prepared by the same techniques as in Example 1.

## Claims

1. An ultrafiltration and reverse osmosis device which comprises a module containing a plurality of axially aligned hollow, porous tubular members disposed in a permeate collection zone, said tubular members being bonded together at spaced intervals along their outer surfaces in a manner which prevents relative axial movement of individual members with respect to one another and which permits permeate passing through the walls of said tubular members to flow freely between adjacent members, and being fixedly mounted at each end into a header.

2. A device as claimed in Claim 1 wherein said tubular members are bonded together at spaced intervals by a deposit of cement at the contact points of two or more of said members.

3. A device as claimed in Claim 1 or Claim 2 wherein said tubular members are bonded together at spaced intervals through a plurality of individual ring-shaped spacers encompassing at least some of said members, said spacers containing a cement on at least one surface thereof.

4. A device as claimed in Claim 1 or Claim 2 wherein said tubular members are bonded together at spaced intervals through a helically wound spacer encompassing at least some of said members, said spacer containing a cement on at least one surface thereof.

5. A device as claimed in any preceding claim wherein said tubular members are self-supporting and not contained in a module shell.

6. A device as claimed in any of of Claims 1 to 4, wherein said tubular members are contained in a module shell which is in slidable engagement with at least one of said headers.

7. A device as claimed in any preceding claim wherein said module can withstand temperature cycles of at least 100°C.

8. A device as claimed in any preceding claim wherein said tubular members can support axial compression of at least 15 kilograms per tube.

9. A device as claimed in any preceding claim wherein said tubular members are composed of carbon and have an internal diameter of from 0.3 centimeters to 3 centimeters.

10. A device as claimed in any preceding claim wherein said tubular members are composed of carbon and have average pore diameters, at least 50 percent of which are within the range of from 0.1 to 2 micrometers.

11. A device as claimed in any preceding claim wherein said tubular members are composed of carbon with an internal coating of metal oxide particle aggregates which have an average mean particle size of from 0.1 to 1 microns.

12. A device as claimed in Claim 11 wherein said metal oxide is zirconia.

13. A device as claimed in any preceding claim wherein said heads are formed from a resinous composition which is molded around said ends of said tubular members.

14. A device as claimed in Claim 13 when appended to Claims 2, 3 or 4 wherein said cement and said headers are composed of a hard, rigid, chemically and thermally stable resinous composition which is liquid and flowable before curing so that when applied to said tubular members it penetrates into the porous matrix thereof a distance sufficient to anchor and prevent axial displacement of said tubular members.

15. An ultrafiltration and reverse osmosis device including a module shell containing a plurality of axially aligned, longitudinally coextensive, hollow, porous carbon tubes disposed in a permeate collection zone, said tubes having an internal diameter of from 0.3 centimeters to 3.0 centimeters and average pore diameters, the majority of which are within the range of from 0.1 to 2.0 micrometers, and having an internal coating of aggregates of metal oxide particles, said tubes being bonded and sealed together at each end by an inert, rigid, high strength, thermally stable header defining substantially smooth, crevice-free surfaces thereon, at least one of said surfaces being substantially flat and lying in a plane which is substantially perpendicular to the longitudinal axis of said tubes and which is substantially coincident with the ends thereof, and said tubes being bonded together at spaced intervals along their outer surfaces, between and spaced from said headers by a plurality of cement deposits providing means for preventing relative axial movement of individual tubes with respect to one another and for permitting permeate passing through the walls of said tubes to flow freely between adjacent tubes, both the cement deposits and said headers being composed of a hard, rigid, chemically and thermally stable resinous composition which is liquid and flowable before curing and when applied to said tubes penetrates into the porous matrix of the tubes a distance sufficient to anchor and prevent axial displacement of the tubes, and said module shell enclosing said pack of hollow carbon tubes and slidably engaging at least one header at one end of said module shell.

## Revendications

1. Dispositif d'ultrafiltration et d'osmose inverse qui comprend un module contenant plusieurs éléments tubulaires poreux, alignés axialement, disposés dans une zone collectrice de perméat, lesdits éléments tubulaires étant liés les uns aux autres à intervalles espacés le long du leurs surfaces extérieures d'une manière qui empêche tout mouvement axial relatif d'éléments individuels les uns par rapport aux autres et qui permet au perméat de passer à travers les parois desdits éléments tubulaires pour s'écouler librement entre des éléments adjacents, et étant montés fixement à chaque extrémité dans un collecteur.

2. Dispositif selon la revendication 1, dans lequel lesdits éléments tubulaires sont liés les uns aux autres à intervalles espacés par un dépôt de colle aux points de contact de deux ou plus desdits éléments.

3. Dispositif selon la revendication 1 ou la revendication 2, dans lequel lesdits éléments tubulaires sont liés les uns aux autres à intervalles espacés au moyen de plusieurs entretoises individuelles de forme annulaire entourant au moins certains desdits éléments, lesdites entretoises contenant une colle sur au moins l'une de leurs surfaces.

4. Dispositif selon la revendication 1 ou la revendication 2, dans lequel lesdits éléments tubulaires sont liés les uns aux autres à intervalles espacés au moyen d'une entretoise enroulée en hélice, entourant au moins certains desdits éléments, ladite entretoise contenant une colle sur au moins l'une de ses surfaces.

5. Dispositif selon l'une quelconque des revendications précédentes, dans lequel lesdits éléments tubulaires sont autoportants et ne sont pas contenus dans une enveloppe de module.

6. Dispositif selon l'une quelconque des revendications 1 à 4, dans lequel lesdits éléments tubulaires sont contenus dans une enveloppe de module qui peut glisser contre au moins 1'un desdits collecteurs.

7. Dispositif selon l'une quelconque des revendications précédentes, dans lequel ledit module peut supporter des cycles de températures d'au moins 100°C.

8. Dispositif selon l'une quelconque des revendications précédentes, dans lequel lesdits éléments tubulaires peuvent supporter une compression axiale d'au moins 15 kg/tube.

9. Dispositif selon l'une quelconque des revendications précédentes, dans lequel lesdits éléments tubulaires sont composés de carbone et ont un diamètre intérieur de 0,3 cm à 3 cm.

10. Dispositif selon l'une quelconque des revendications précédentes, dans lequel lesdits éléments tubulaires sont composés de carbone et ont des diamètres moyens de pores dont au moins 50% sont compris dans la plage de 0,1 à 2 micromètres.

11. Dispositif selon l'une quelconque des revendications précédentes, dans lequel lesdits éléments tubulaires sont composés de carbone avec un revêtement interne d'agrégats de particules d'oxyde de métal qui ont une dimension moyenne de particules de 0,1 à 1 micromètre.

12. Dispositif selon la revendication 11, dans lequel ledit oxyde de métal est de la zircone.

13. Dispositif selon l'une quelconque des revendications précédentes, dans lequel lesdites têtes sont formées d'une composition résineuse qui est moulée autour desdites extrémités desdits éléments tubulaires.

14. Dispositif selon la revendication 13 prise avec les revendications 2, 3 ou 4, dans lequel ladite colle et lesdits collecteurs sont composés d'une composition résineuse dure, rigide, chimiquement et thermiquement stable, qui est liquide et qui peut couler avant la maturation de manière que, lorsqu'elle est appliquée sur lesdits éléments tubulaires, elle pénètre dans leur matrice poreuse sur une distance suffisante pour ancrer et empêcher tout déplacement axial desdits éléments tubulaires.

15. Dispositif d'ultrafiltration et d'osmose inverse comprenant une enveloppe de module contenant plusieurs tubes de carbone poreux, alignés axialement s'étendant longitudinalement les uns à côté des autres, disposés dans une zone collectrice de perméat, lesdits tubes ayant un diamètre interne de 0,3 cm à 3,0 cm et des diamètres moyens de pores dont la majorité est comprise dans la plage de 0,1 à 2,0 micromètres, et ayant un revêtement interne d'agrégats de particules d'oxyde de métal, lesdits tubes étant liés et scellés les uns aux autres, à chaque extrémité, par un collecteur inerte, rigide, à haute résistance, thermiquement stable, présentant des surfaces sensiblement lisses et exemptes de fissures, au moins l'une desdites surfaces étant sensiblement plane et s'étendant dans un plan qui est sensiblement perpendiculaire à l'axe longitudinal desdits tubes et qui est sensiblement coïncidant avec leurs extrémités, et lesdits tubes étant liés les uns aux autres à intervalles espacés le long de leurs surfaces extérieures, entre lesdits collecteurs et à distance de ceux-ci par plusieurs dépôts de colle constituant des moyens pour empêcher tout mouvement axial relatif de tubes individuels les uns par rapport aux autres et pour permettre au perméat de passer à travers les parois desdits tubes afin de s'écouler librement entre les tubes adjacents, les dépôts de ciment et lesdits collecteurs étant composés d'une composition résineuse dure, rigide, chimiquement et thermiquement stable, qui est liquide et qui peut couler avant la maturation et qui, lorsqu'elle est appliquée sur lesdits tubes pénètre dans la matrice poreuse des tubes sur une distance suffisante pour ancrer et empêcher tout déplacement axial des tubes, et ladite enveloppe de module renfermant ledit faisceau de tubes de carbone et pouvant glisser contre au moins un collecteur à une extrémité de ladite enveloppe du module.

## Patentansprüche

1. Vorrichtung für Ultrafiltration und umgekehrte Osmose mit einem Stab aus einer Vielzahl von axial ausgerichteten hohlen porösen rohrförmigen, in einer Permeationszone angeordneten Teilen, die in unterteilten Abständen entlang ihrer äußeren Oberflächen derart miteinander verbunden sind, daß eine relative axiale Bewegung einzelner Teile gegeneinander verhindert und ein freier Fluß des durch die Wände der rohrförmigen Teile hindurchgehenden Permeats zwischen benachbarten Teilen möglich ist und die an jedem Ende dauerhaft in einem Kopfstück befestigt sind.

2. Vorrichtung nach Anspruch 1, dadurch gekennzeichnet, daß die rohrförmigen Teile in unterteilten Abständen an den Berührungspunkten von zwei oder mehreren der Teile mittels Bindemittel verbunden sind.

3. Vorrichtung nach Anspruch 1 oder 2, dadurch gekennzeichnet, daß die rohrförmigen Teile in unterteilten Abständen durch eine Vielzahl von einzelnen ringförmigen Abstandhaltern, die mindestens einige der Teile umfassen, miteinader verbunden sind und auf mindestens einer Oberfläche der Abstandhalter Bindemittel vorhanden ist.

4. Vorrichtung nach Anspruch 1 oder 2, dadurch gekennzeichnet, daß die rohrförmigen Teile in unterteilten Abständen durch einen spiralförmig gewundenen Abstandhalter verbunden sind, der mindestens einige der Teile umfasst, und daß auf mindestens einer Oberfläche des Abstand-halters ein Bindemittel vorhanden ist.

5. Vorrichtung nach den vorherigen Ansprüchen, dadurch gekennzeichnet, daß die rohrförmigen Teile selbsttragend und nicht in einem Stabgehäuse angeordnet sind.

6. Vorrichtung nach Ansprüchen 1 bis 4, dadurch gekennzeichnet, daß die rohrförmigen Teile in einem Stabgehäuse angeordnet sind, das in verschiebbarem Eingriff mit mindestens einem der Kopfstücke steht.

7. Vorrichtung nach den vorherigen Ansprüchen, dadurch gekennzeichnet, daß der Stab zyklischen Temperaturbelastungen von mindestens 100°C widersteht.

8. Vorrichtung nach den vorherigen Ansprüchen, dadurch gekennzeichnet, daß die rohrförmigen Teile einen axialen Druck von mindestens 15 kg pro Rohr abstützen können.

9. Vorrichtung nach den vorherigen Ansprüchen, dadurch gekennzeichnet, daß die rohrförmigen Teile aus Kohlenstoff bestehen und einen Innendurchmesser von 0,3 cm bis 3,0 cm aufweisen.

10. Vorrichtung nach den vorherigen Ansprüchen, dadurch gekennzeichnet, daß die rohrförmigen Teile aus Kohlenstoff bestehen und mindestens 50% der mittleren Porendurchmesser im Bereich von 0,1 bis 2,0 $\mu$m liegen.

11. Vorrichtung nach den vorherigen Ansprüchen, dadurch gekennzeichnet, daß die rohrförmigen Teile aus Kohlenstoff bestehen, mit einer Innenbeschichtung aus aggregierten Metalloxidteilchen, deren mittlere Teilchengröße von 0,1 bis 1,0 $\mu$m beträgt.

12. Vorrichtung nach Anspruch 11, dadurch gekennzeichnet, daß das Metalloxid Zirkondioxid ist.

13. Vorrichtung nach den vorstehenden Ansprüchen, dadurch gekennzeichnet, daß die Kopfstücke aus einer um die Enden der rohrförmigen Teile gegossenen Harzzusammensetzung gebildet sind.

14. Vorrichtung nach Anspruch 13 und Ansprüchen 2, 3 oder 4, dadurch gekennzeichnet, daß das Bindemittel und die Kopfstücke aus einer harten, festen chemisch und thermisch stabilen Harzzusammensetzung bestehen, die vor dem Härten flüssig und fließfähig ist, so daß sie beim Aufbringen auf die rohrförmigen Teile in die poröse Matrix ausreichend tief eindringt, daß die Teile fixiert sind und eine axiale Verschiebung verhindert ist.

15. Vorrichtung für Ultrafiltration und umgekehrte Osmose mit einem Stabgehäuse, enthaltend eine Vielzahl von in einer Permeationszone angeordneten axial ausgerichteten sich längs erstreckenden hohlen porösen Kohlenstoffrohren, die einen Innendurchmesser von 0,3 cm bis 3,0 cm und mittlere Porendurchmesser überwiegend im Bereich von 0,1 bis 2,0 $\mu$m und eine Innenbeschichtung aus aggregierten Metalloxidteilen aufweisen, wobei die Rohre an jedem Ende durch ein inertes festes, hochbruchfestes thermisch stabiles Kopfstück mit im wesentlichen glatten rißfreien Oberflächen miteinander verbunden und versiegelt sind, wobei mindestens eine dieser Oberfläche im wesentlichen eben ist und in einer Ebene liegt, die sich im wesentlichen senkrecht zur Längsachse der Rohre erstreckt und die im wesentlichen mit den Rohrenden zusammenfällt, wobei die Rohre in unterteilten Abständen entlang ihrer äußeren Oberflächen zwischen und in Abstand von den Kopfstücken durch eine Vielzahl von Bindemittelablagerungen derart miteinander verbunden sind, daß eine relative axiale Bewegung der Rohre gegeneinander verhindert und ein freier Fluß des durch die Wände der Rohre hindurchgehenden Permeats zwischen benachbarten Rohren möglich ist, beide, Bindemittelablagerungen und Kopfteile bestehen aus einer harten, festen chemisch und thermisch stabilen Harzzusammensetzung, die vor dem Härten flüssig und fließfähig ist, so daß sie beim Aufbringen auf die Rohre in die poröse Matrix ausreichend tief eindringt, daß die Rohre

15 16

fixiert sind und eine axiale Verschiebung verhindert ist, und das Stabgehäuse, das das Bündel der hohlen Kohlenstoffrohre umgibt, in verschiebbarem Eingriff mit mindestens einem Kopfstück an einem Ende des Stabgehäuses steht.

FIG. 1

FIG. 1a

FIG. 1b

FIG. 1c

FIG. 2a

FIG. 2b

FIG. 2c

FIG. 3a

FIG. 3b

FIG. 4a

FIG. 4b

22

FIG. 4c

10

22

FIG. 5a

10

30

26

FIG. 5b

28

10

31

26

# FIG. 6

28

20

26

29

30

# FIG. 7a

32

29

36

# FIG. 7b

34

36

38

# FIG. 8